(19) Europäisches Patentamt / European Patent Office / Office européen des brevets

(11) **EP 1 782 696 B1**

(12) **EUROPEAN PATENT SPECIFICATION**

(45) Date of publication and mention
of the grant of the patent:
**23.01.2019 Bulletin 2019/04**

(51) Int Cl.:
**A23K 20/147** *(2016.01)*    **A23K 50/42** *(2016.01)*
**A23K 50/45** *(2016.01)*    **A23J 3/18** *(2006.01)*

(21) Application number: **07100893.2**

(22) Date of filing: **14.07.2005**

(54) **Method for manufacturing human food applications or intermediates for non-food applications and human food application or intermediate for non-food application**

Verfahren zur Herstellung von Lebensmittelanwendungen für Menschen und Zwischenprodukten für Nichtlebensmittelanwendungen sowie Lebensmittelanwendung für Menschen und Zwischenprodukt für Nichtlebensmittelanwendung

Procédé de fabrication d'applications alimentaires pour l'Homme ou d'intermédiaires pour applications autres qu'alimentaires et application alimentaire pour l'Homme ou intermédiaire pour application autre qu'alimentaire

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**09.05.2007 Bulletin 2007/19**

(62) Document number(s) of the earlier application(s) in accordance with Art. 76 EPC:
**05015356.8 / 1 743 529**

(73) Proprietor: **Tereos Starch & Sweeteners Belgium 9300 Aalst (BE)**

(72) Inventors:
- **Pibarot, Patrick**
  **80170 Guillaucourt (FR)**
- **Redl, Andres**
  **9840 ZEVERGEM (BE)**
- **Reynes, Pierre**
  **80090 AMIENS (FR)**
- **Maesmans, Geert**
  **3020 HERENT (BE)**
- **Scheerlinck, Wim**
  **9470 DENDERLEEUW (BE)**

(74) Representative: **Ostyn, Frans**
**KOB NV**
**President Kennedypark 31 c**
**8500 Kortrijk (BE)**

(56) References cited:
EP-A- 1 066 759    WO-A-02/41701
GB-A- 1 433 976    US-A- 2 586 675
US-A- 5 456 934    US-A- 6 007 858
US-B1- 6 500 463

- **GONTARD N ET AL: "WATER AND GLYCEROL AS PLASTICIZERS AFFECT MECHANICAL AND WATER VAPOR BARRIER PROPERTIES OF AN EDIBLE WHEAT GLUTEN FILM" JOURNAL OF FOOD SCIENCE, INSTITUTE OF FOOD TECHNOLOGISTS, CHICAGO, IL, US, vol. 58, no. 1, January 1993 (1993-01), pages 206-211, XP000356616 ISSN: 0022-1147**
- **POUPLIN M; REDL A; GONTARD N: "Glass transition of wheat gluten plasticized with water, glycerol, or sorbitol." JOURNAL OF AGRICULTURAL AND FOOD CHEMISTRY, vol. 47, no. 2, 1999, pages 538-543, XP002352916**
- **REDL. A, MOREL M. H., BONICEL J., GUILBERT S., VERGNES B.: RHEOLOGICA ACTA, vol. 38, 1999, pages 311-320, XP002427421**

## Description

The subject of this application is an improved method for manufacturing human food applications or intermediates for non-food applications, comprising a plasticized gluten composition having improved flexibility regarding transformation. Via compression moulding, calendering or lamination transformation, or any other processing method using rubber-processing conditions, biodegradable objects can be made showing a broad range of mechanical properties. The intermediate plasticized gluten material can thereby be further processed into e.g. flexible sheets, or three-dimensional forms.

## State of the art:

Plasticized wheat gluten compositions have been previously described in the prior art. Gluten is a protein and has been described as a high molecular weight polymer (Wrigley, et al. 1996. Glutenin polymers - Natures largest proteins. Royal Australian Chemical Institute: North Melbourne, Australian p. 316), where glutenin subunits are linked by interchain disulfide bonding of cysteine residues. (Graveland, A. et al. 1985. A model for the molecular structure of the glutenins from wheat flour. J Cereal Sci. Vol. 3:1-6).

Moreover, previously documented is the fact that gluten is considered a glassy polymer that has a glass transition temperature which depends on plasticizer content and pressure. (Hoseney, R.C., et al. 1986. Wheat gluten: a glassy polymer. Cereal Chem. 63:285-286.) Furthermore, gluten viscosity will not decrease upon heating but instead will level off or increase due to crosslinking reactions. (Attenburrow et al., Rheological properties of wheat gluten. 1990. J. Cereal Sci. 12:1-14) .

Knowledge of the crosslinking reactions is important to understanding thermoplastic extrusion processing. The formation of the final molecular network formed with gluten and glycerol (as a plasticizer) involves the disassociation and unfolding of the macromolecules, which allow them to recombine and to crosslink through specific linkages. (Redl, A., et al. 1999. Rheological properties of gluten plasticized with glycerol: dependence on temperature, glycerol content and mixing conditions. Rheol. Acta 38:311-320.) Therefore, it is known that glycerol has a plasticizing affect on gluten.

The combination of gluten with glycerol has been used in a variety of foods. In US 6,007,858 glycerol is used a humectant to preserve gluten. In this patent, up to 15% wheat gluten was mixed with glycerol or maltodextrin to prepare tamale rolls.

WO 0008944 describes a composition for the preparation of chewing gums. Plasticized proteinaceous materials are disclosed which are prepared by a batch process or prepared continuously by mixing the protein with a plasticizer. Batch processing is performed by utilising a Brabender Torque rheometer (high shear batch mixing). Continuous plasticization is performed by utilising a counter-rotating conical twinscrew extruder. Typical processing conditions utilised thereby are a processing temperature of 70°C-100°C, and a processing torque of 500 to 3000 mg. Among the different proteinaceous materials, zein and wheat gluten are cited as the preferred proteinaceous materials. The materials are used as an ingredient for preparing non-sticking chewing gum.

The object of US 6,818,245 is to provide a digestible degradable gluten composition that can be stored for a prolonged period of time without degradation and used as a gum base for chewing gums. This object was realised by developing vital wheat gluten in a non-aqueous medium (i.e. a medium having an $a_w$ <0,8). In a typical preparation, vital wheat gluten and a plasticizer are mixed together from 5 minutes to an hour at a temperature between 50°C and 90°C, typically 58°C, in a mixer until 75% of the maximum torque is obtained. Mixing must be stopped when 75% of the torque value is reached so there is not a loss in mechanical properties of the gluten mixture, e.g., to allow the gluten to unfold, and to restore their interactions, i.e. H-bridges, hydrophobic and ionic bonds, sulphur bridges and cross-links. The ratio of vital wheat gluten compared to "non-aqueous" medium is 20:80 and 60:40. In the majority of the examples cited in this patent utilized 50% vital wheat gluten mixed with 50% glycerol.

Other work on the behaviour of vital wheat gluten plasticized with glycerol was performed by A. Redl, S. Guilbert, et al.. The results of that work were published in several scientific journals, such as "Rheologicial properties of gluten plasticized with glycerol: dependence on temperature, glycerol content and mixing conditions", Rheologica Acta Vol. 38: 311-320 (1999). This article describes using a Haake batch mixer to provide specific mechanical energy (SME) to a mixture of gluten and glycerol from 4.5 to 32.5 minutes to determine the affects of torque on batch mixing. The Glycerol content varied from 30-60% and the higher levels of glycerol required larger SME values. The range of SME varied from 1000 - 2000 KJ/Kg. Further the operating temperature was maintained at 80°C.

The publications Les Cahiers de Rhéologie, (1997), p.339-347, and J. Agric. Food Chem. (1999), vol. 47, p.538-543 are related to the preparation of glycerol-plasticized wheat gluten compositions utilising torque to develop a dough. Thereby it is observed that as the torque increases, the gluten/glycerol blend, originally showing the consistence of a sand/water blend, changes its consistency into a cohesive plastic and very sticky dough. When the maximum torque is surpassed, the gluten/glycerol dough aspect changes into a fairly glossy, non-sticky and very elastic material. The temperature change in the gluten/glycerol blends during mixing is characterised by a sigmoid shape curve with the turning point at the maximum torque.

Furthermore, it is observed that, to a certain extent, these temperature increases result in irreversible changes of the plasticized material whereby the final product obtained may no longer be suitable for the applications mentioned above. The ratio between gluten and plasticizer in these applications varies between 75:25 and 60:40.

In Cereal Chemistry, 1999, vol. 76, p.361-369, by the same authors, the extrusion of wheat gluten plasticized with glycerol is discussed. This publication concludes that extrusion at low barrel temperatures (<60°C) is limited because of increasing viscosity. The increase in viscosity causes the die pressure and torque to increase past the limits of the extruder. It is further observed that specific mechanical energy input (SME) is at least 638 kJ/kg as disclosed in table I of that same publication.

The international patent application WO 02/41701 discloses a method for preparing a chewable composition comprising the steps of: Mixing vital gluten 30-60 % w/w; with syrups or sugar substitutes such as xylitol in amount of 10-50 % w/w and water 10-30 % w/w, relative to the total mass of the mixture. The mixing takes place at a temperature of 50-80°C while Supplying a kneading energy of 50-800 kJ/ kg to the mixture.

The British patent application GB 1433976 discloses a method for producing dry pet food having a substantially smooth and solid soft, meat-like texture and appearance, said method comprising the steps of:

- Blending a dough containing fat, proteinaceous adhesive (alkali modified wheat gluten 4-60% w/w) and a plasticizing agent (glycerol, sorbitol, butanediol, mannitol propylene glycol: 2-40 % w/w); and
- Cooking at 71-132 °C.

In order to obtain the alkali modified wheat gluten according to GB 1433976, a wheat gluten slurry is alkalinized with an alkali carbonate at pH ~8 and heated at a temperature of 146-154°C.

EP1066759 discloses a method for developing wheat gluten comprising the steps of:

- mixing gluten 20 - 60 % (d.s. w/w) with a non-aqueous medium; - kneading the mixture at a temperature of between 50 and 90 °C; - continuing the kneading until the value of at least 75% of the maximal torque is reached; - shaping the gluten into a desired form.

US 5456 934 discloses a process for preparing a cohesive, retort-stable, shaped food piece, which process comprises: (a) preparing a premixture comprising (1) from about 20-80% by weight gluten, (2) from about 20-80% by weight flour, (3) from 0-50% by weight meat and bone meal, (4) from 0-9% by weight fat, (5) from 0-0.7% by weight added sulfur, (6) from 0-2% by weight dicalcium phosphate, wherein the weight percentage of the premixture components are expressed as a percentage of the premixture; (b) combining the premixture with water to form a secondary mixture, wherein the ratio of premixture to water is in the range of from about 1.6:1 to about 4:1;(c) mixing the secondary mixture for a period of time sufficient to obtain a substantially uniformly mixed dough and under conditions such that the temperature of the secondary mixture and uniformly mixed dough in the mixing operation are maintained in the range of from about 15-45°C; and (d) forming the uniformly mixed dough into a desired shaped piece, wherein the forming operation is carried out at a specific mechanical energy in the range of from about 6-70 watt. hr./kg. and at a pressure of at least about 400 psig, and under conditions such that the temperature of the uniformly mixed dough in the forming operation is in the range of from about 40 -100°C, and wherein said shaped piece is cohesive and maintains its shape when retorted.

In order to obtain plasticized wheat gluten compositions, a common denominator in the above cited prior art is the use of dough development conditions or shear mixing conditions that result in torque and temperature increases of the composition during processing.

Because wheat gluten becomes more reactive at increasing temperatures, cross-linking occurs, and as a result thereof, viscosity of the plasticized material further develops. Thereby a cascade of events occurs consisting in further temperature increases, additional cross-linking and further viscosity development. This can lead to degradation and even burning of the gluten based material. The above described self-catalysing process can be controlled to a certain extent, by increasing plasticizer content of the gluten-based composition.

As a result of these conditions, the products obtained by these prior art processes do show a number of shortcomings, such as:

- diminished transformation possibilities: irreversible changes occurring in the plasticized mass, make that if this mass needs to be reshaped, it must undergo a thermal treatment whereby the temperature now required will exceed the temperature of the previous processing step,
- and/or a relatively low extensibility: due to the autocatalytic process, the plasticized mass may become more and more rigid (reduced elongation at break, reduced flexibility), while tear strength increases,
- And/or increased plasticizer content: this compensates to a certain extent loss in transformation possibilities and provides some flexibility with regard to mechanical properties.

As a result of the above cited shortcomings, the degree of incorporation of prior art plasticized wheat gluten in food, feed and non-food applications is limited.

Furthermore, US 2,586,675 describes a method of making a chewing gum that utilizes gluten and glycerin to prevent the gum from hardening and drying out. The gum is maintained in an elastic and chewable state by combining 50-85% gluten with 15-30% glycerin, a sweet substance, and allowing the mixture to ripen from 1 to 6 hours for the plasticizer to penetrate the gluten. However, the process for obtaining such a plastic material is quite lengthy and difficult to put into practice in an industrial environment.

In view of the above cited prior art, the problem to be solved is therefore to provide an improved process for preparing human food applications or intermediates for non-food applications comprising plasticized gluten compositions.

Preferably these compositions contain a low plasticizer content (e.g. below 40% by weight of the plasticized material), whereby the plasticized material does show good cohesive properties, high extensibility and easy transformation properties.

The origin of the gluten is preferably wheat or other cereals.

Cohesive properties are thereby reflected by stress-at-break values and extensibility by elongation-at-break values.

Easy transformation properties are reflected by the possibility to shape/reshape the plasticized material at temperatures below 70°C.

This has now been realized by the process according to the present invention.

The invention proposes a method for manufacturing human food applications or intermediates for non-food applications, comprising a plasticized gluten composition, wherein at least gluten and a plasticizer are mixed in a mixing device, wherein 60 to 85 parts by weight of vital wheat gluten and between 15 to 40 parts by weight of a plasticizer are mixed, that the temperature of the mixing device is set to a value between - 10 °C and 55 °C, and that the SME (Specific Mechanical Energy) applied to the mix is below 250 kJ/kg.

The mixing is preferably carried out continuously.

Preferably, the mixing is carried out with a SME of less than 200 kJ/kg.

Preferably, the mixing is carried out with a SME of more than 75 kJ/kg, preferably more than 150 kJ/kg, and most preferably 150 kJ/kg.

In a preferred embodiment of a method according to the invention, the plasticizer content is below 35%, more preferably below 30%.

In an advantageous embodiment of a method according to the invention, the plasticizer content is more than 20%.

Preferably the temperature of the mixing device is set to a value between - 10 °C and 45 °C, preferably between - 10 °C and 0 °C.

The advantage of this low-temperature conditions is that the gluten molecules do not unfold. At least the gluten molecules unfold without breaking the intermolecular and intramolecular disulfide bonds, thus maintaining the elasticity such that the final state of the molecule is still springy.

The plasticizer is selected from the group of polyhydroxy alcohols, starch hydrolysates, lower fatty acids (C2 up to C12), hydroxyalkylamines, hydroxy acids, polycarboxylic acids and/or urea.

The polyhydroxy alcohols are selected among glycerol, ethylene glycol, propylene glycol, di-ethylene glycol, tri-ethylene glycol and sugar alcohols and may contain up to 30% by weight of water. The sugar alcohols are selected among sorbitol, maltitol, xylitol, mannitol, lactitol, erythritol, isomalt, and hydrogenated starch hydrolysates.

The preferred polyhydroxy alcohols used are selected among glycerol, ethylene glycol, propylene glycol, di-ethylene glycol and tri-ethylene glycol, glycerol being the most preferred.

The hydroxyl acids may be selected among lactic acid, malic acid or tartaric acid, gluconic acid, and salts thereof.

The polycarboxylic acids are selected among succinic acid, adipic acid, citric acid, isocitric acid, glucaric acid and salts thereof.

The wheat gluten material as such may show some variability in rheological properties, as illustrated by Alveograph measurements, or by Brabender Plastograph measurements. These variations are due to the origins of the wheat raw material used, to variations in harvest conditions, and to variations in processing conditions.

Suitable continuous mixers can be selected among continuous screw mixers, continuous ribbon blenders and extruders equipped with a screw configuration allowing mixing without substantial mechanical energy input. Such types of screw configurations are known to the skilled technician.

An extruder is used containing the required screw configuration. When using an extruder, it is advantageous to set the barrel and screw temperature between - 10°C and 55°C. As a result thereof the barrel temperature at the mixing screw section should not surpass 60°C, preferably 50°C. At the same time the temperature of the materials exiting the continuous mixing unit will not surpass 90°C, preferably 80°C.

The plasticized wheat gluten material is composed of 65 - 75 parts by weight vital wheat gluten and 35 - 25 parts by weight of plasticizer. Depending on the processing conditions in combination with the quantities of ingredients used, a variety of suitable plasticized materials can be obtained. The properties of these compositions may vary from homogeneous, plastic and deformable to tough, rubber-elastic and highly extensible.

Homogeneous, plastic and deformable hereby means that the material exiting the continuous mixing device, and being stored during 1-24 hours, can be (re)shaped using mild conditions (T<50°C).

The plasticized compositions exiting the continuous mixing device can be used as such or further processed and shaped. Further processing and shaping may be performed by e.g. by compression moulding, calendering, lamination transformation and/or by microwave treatment.

Compared to the compositions of the prior art cited above, less extreme processing conditions (temperature and specific mechanical energy input SME) are needed to obtain well shaped rubber-elastic products. At the same time the intermediate and end-materials may comprise less plasticizer and more gluten protein. A reduced plasticizer content may be advantageous in a number of food and/or feed applications were a too high content of low MW polyol plasticizer is not desirable (e.g. chewy confectionery, meat imitations, etc.).

In a further aspect of the invention, human food applications or intermediates for non-food applications can be prepared by combining a range of products with the plasticized wheat gluten prepared according to the process of the invention. The composition comprises preferably 99,5 - 75 % by weight of a plasticized wheat gluten composition prepared by a mixing process according to the invention, and 0,5 - 25 % by weight of a product added during of after the continuous mixing process.

More preferably the composition comprises 99 - 85 % by weight of a plasticized wheat gluten composition prepared by a continuous mixing process according to the invention, and 1 - 15 % by weight of a product added during or after the continuous mixing process.

These products may be selected among the by-products obtained during processing of agricultural or forest raw materials, polysaccharides and derivatives thereof, other proteins of vegetable or animal origin, mineral compounds, synthetic polymers and/or mixtures thereof.

The agricultural by-products may comprise by-products from the wet and/or dry-milling of cereals, in particular maize and wheat, from the processing of oleaginous materials, including but not limited to soy, sunflower or rapeseed, from the processing of other major crops such as, but not limited to, sugar cane, sugar beet, potato, or tapioca.

Polysaccharides include but are not limited to starches in native or modified form, cellulose and derivatives thereof, beta glucans, inulin-type polysaccharides, pectins, arabinoxylans, plant gums or microbial gums.

Other proteins include but are not limited to e.g. soy concentrates and isolates, leguminous proteins, casein and derivatives thereof, whey proteins, fish proteins, or animal proteins including plasma proteins.

Further, also additives can be incorporated, such as colouring or flavouring additives, amino acids, peptides, vitamins, stabilizers, and/or emulsifiers.

The invention will now be illustrated by a number of examples.

EXAMPLES

*Materials:*

- Vital wheat gluten,(Amygluten 110 & 160) 94% d.s. Amygluten 160 has a dough development time of 10 min. as determined in a counter rotating batch mixer (Brabender Plastograph) while Amygluten 110 has a dough development time of 5 min. in the same conditions. These time values correspond to the maximum torque value measured in the plastograph while mixing a composition of 100 parts by weight gluten and 53 parts by weight glycerol

- Food grade glycerol (14% water content)

*Equipment:*

Extrusion is performed with a co-rotating, self-wiping, twinscrew extruder with a barrel diameter (D) of 53 mm (Clextral Evolum 53). The extruder barrel consists of 9 zones of 212 mm length, each zone being equipped with an independent temperature control based on resistive heaters and water circulation in a double jacket. The 5th zone is equipped with an opening. The feeding zone is cooled by water circulation. The total length of the screw is 36D. Each screw is composed of double flighted right-handed screw elements with different pitches, and a kneading section of five paddles with a right-handed staggering of 45°. Gluten powder is fed with a twin screw gravimetric feeder and glycerol with a metering pump.

Two screw configurations were tested. In a first series of trials the kneading element is located between the

5th and 6th zone. In a second series, the kneading element was placed at the very end of the screw. This allows developing viscosity as late as possible. Barrel temperature mentioned below was determined at the location of the kneading elements (respectively at the 5th and 6th zone, and at the end of the screw).

The SME value in the framework of the present invention has been determined according to the following equation:

$$SME = N/N_{max} * 1/D * U * I * 0.9$$

where:

N = screw speed read
$N_{max}$ = maximal screw speed of the extruder
D = dry mix rate (kg/h)U = armature potential difference on DC motor (V)
I = amperage consumption by the electrical motor (A)
0.9 = coefficient taking in account losses between electrical motor and gear box

**Example 1-3:**

In the following examples a screw configuration containing the kneading element between the 5th and 6th zone was used. Two compositions of wheat gluten (Amygluten 160) and plasticizer were tested. The third composition was equal to example 2 except that a different gluten material is used (Amygluten 110) .

|  | Example 1 | Example 2 | Example 3 |
|---|---|---|---|
| Extrudate composition(w/w) | 61% Amygluten 160 34% glycerol 6% water | 66% Amygluten 160 28% glycerol 6% water | 66% Amygluten 110 28% glycerol 6% water |
| Screw speed (rpm) | 220 | 220 | 220 |
| Throughput (kg/h) | 132 | 122 | 122 |
| Extrudate temp. (°C) | 65-70 | 70-75 | 65-70 |
| Barrel temp. (°C) | 45 | 50 | 45 |
| SME (kJ/kg) | 211 | 228 | 210 |
| $A_w$ | 0.4 | 0.42 | 0.40 |
| Moisture (%) | 13 | 12 | 13 |
| Penetrometry (N) | 17 | 17 | 10 |
| Maximum Stress (Breaking force) (N) | 75 | 315 | 165 |
| Elongation at break (%) | 400 | 615 | 420 |

Traction measurement: speed 10 mm/min
Penetrometry test with cone 45°; penetration depth 6 mm

In the case of example 1, a homogeneous, plastic and deformable material was obtained. This material was moulded in a separate step, immediately after extrusion. After storing the moulded material for 24 hours at room temperature, a rubber-elastic product was obtained that could no longer be reshaped at room temperature.

In the case of example 2, lower plasticizer content resulted in a very elastic, extensible, rubber-like material that could not be further shaped by "cold" techniques such as lamination. However, cutting into any desired shape caused no problems, while hot molding allowed reshaping of the material. Mechanical properties however changed during hot molding, providing compositions still being elastic but tougher (higher E-modulus) and less extensible.

In example 3 the same conditions of example 1 are used. Amygluten 160 is replaced by Amygluten 110, having a shorter dough development time.

This resulted in a cohesive and very elastic, rubber-like material showing a very high extrudate swell (about 200%, calculated as extrudate diameter/die diameter*100). The material could be shaped by means of "cold" techniques such as lamination.

This illustrates that different types of vital wheat gluten can be used.

**Examples 4-6:**

In this series of examples a screw configuration was used containing the kneading elements at the very end of the screw. At the same time the last barrel elements are cooled with glycolated water (at -6°C). All experiments were performed using Amygluten 160.

|  | Example 4 | Example 5 | Example 6 |
|---|---|---|---|
| Extrudate composition(% w/w) | 68% Amygluten 160 27% glycerol 5% water | 72% Amygluten 160 24% glycerol 4% water | 72% Amygluten 160 20% glycerol 8% water |
| Screw speed (rpm) | 190 | 190 | 190 |
| Throughput (kg/h) | 147 | 139 | 139 |
| Extrudate temp. (°C) | 70-75 | 80-85 | 75-80 |
| Barrel temp. (°C) | 38 | 51 | 46 |
| SME (kJ/kg) | 121 | 208 | 158 |
| $A_w$ | 0.46 | 0.46 | 0.60 |
| Moisture (%) | 11 | 11 | 13.5 |
| Penetrometry (N) | 35 | 63 | 37 |
| Maximum Stress (Breaking force) (N) | 320 | 380 | 260 |
| Elongation at break (%) | 460 | 340 | 310 |

Traction measurement: speed 10 mm/min

Penetrometry test with cone 45°; penetration depth 6 mm

In all three examples homogeneous, elastic rubber-like extrudates were obtained.

**Claims**

1. A method for manufacturing human food applications or intermediates for non-food applications comprising a plasticized gluten composition, wherein gluten and a plasticizer are mixed in a continuous mixing device, **characterised in that** 65 to 75 parts by weight of vital wheat gluten and between 25 to 35 parts by weight of a plasticizer selected from the group of polyhydroxy alcohols, starch hydrolysates, lower fatty acids (C2 up to C12), hydroxyalkylamines, hydroxyl acids, polycarboxylic acids and/or urea, are mixed, and that the temperature of the continuous mixing device is set to a value between - 10 °C and 55 °C, and that the SME (Specific Mechanical Energy) applied to the mix is below 250 kJ/kg.

2. The method according to claim 1, **characterised in that** the mixing is carried out with a SME of less than 200 kJ/kg.

3. The method according to any of the preceding claims, **characterised in that** the mixing is carried out with a SME of more than 75 kJ/kg, preferably more than 150 kJ/kg, most preferably 150 kJ/kg.

4. The method according to any of the preceding claims, **characterised in that** the temperature of the mixing device is set to a value between -10°C and 0°C.

5. The method according to any of the preceding claims, **characterised in that** the polyhydroxy alcohols are selected among glycerol, ethylene glycol, propylene glycol, di-ethylene glycol, tri-ethylene glycol and/or sugar alcohols; wherein said polyhydroxy alcohols contain up to 30 % by weight of water.

6. The method according to claim 4 or 5, **characterised in that** the sugar alcohols are selected among sorbitol, maltitol, xylitol, mannitol, lactitol, erythritol, isomalt, and/or hydrogenated starch hydrolysates.

7. The method according to any of the preceding claims, **characterised in that** the hydroxyl acids are selected among lactic acid, malic acid, tartaric acid, gluconic acid and/or salts thereof.

8. The method according to any of the preceding claims, **characterised in that** the polycarboxylic acids are selected among succinic acid, adipidic acid, citric acid, isocitric acid, glucaric acid and/or salts thereof.

9. The method according to any one of claims 1 to 8, **characterised in that** the continuous mixing device is selected among continuous screw mixers, continuous ribbon blenders or extruders equipped with a screw configuration allowing mixing without substantial mechanical energy input.

10. The method according to claim 9, **characterised in that** an extruder is used, of which the barrel and screw temperature are set at a temperature between - 10 °C and 55 °C.

11. The method according to claim 9 or 10, **characterised in that** the temperature of the plasticized wheat gluten composition exiting the continuous mixing device is less than 90 °C, preferably less than 80 °C.

12. The method according to any one of the preceding claims, further comprising adding during or after the continuous mixing process a product selected from the by-products obtained during processing of agricultural and/or forest raw materials, polysaccharides and derivatives thereof, other proteins of vegetable and/or animal origin, mineral compounds, synthetic polymers and/or mixtures thereof; wherein the final composition comprises 99,5 - 75 % by weight of a plasticized wheat gluten composition prepared by a mixing process according to any one of the preceding claims, and 0,5 - 25 % by weight of the added product.

13. The method according to claim 12, wherein the final composition comprises 99-85 % by weight of a plasticized wheat gluten composition prepared by a mixing process according to any one of the preceding claims, and 1 - 15 % by weight of the added product.

**Patentansprüche**

1. Verfahren zur Herstellung von Lebensmittelanwendungen für Menschen oder Zwischenprodukten für Nichtlebensmittelanwendungen, umfassend eine plastifizierte Glutenzusammensetzung, wobei Gluten und ein Weichmacher in einer kontinuierlichen Mischvorrichtung gemischt werden, **dadurch gekennzeichnet, dass** 65 bis 75 Gewichtsteile vitales Weizengluten und zwischen 25 und 35 Gewichtsteile eines Weichmachers ausgewählt aus der Gruppe Polyhydroxyalkohole, Stärkehydrolysate, niedere Fettsäuren (C2 bis C12), Hydroxyalkylamine, Hydroxylsäuren, Polycarbonsäuren und/oder Harnstoff gemischt werden und dass die Temperatur der kontinuierlichen Mischvorrichtung auf einen Wert zwischen -10 °C und 55 °C eingestellt wird, und dass die auf die Mischung angewendete SME (spezifische mechanische Energie) unter 250 kJ/kg liegt.

2. Verfahren nach Anspruch 1, **dadurch gekennzeichnet, dass** das Mischen mit einer SME von weniger als 200 kJ/kg durchgeführt wird.

3. Verfahren nach einem der vorhergehenden Ansprüche, **dadurch gekennzeichnet, dass** das Mischen mit einer SME von mehr als 75 kJ/kg, vorzugsweise mehr als 150 kJ/kg, am meisten bevorzugt 150 kJ/kg durchgeführt wird.

4. Verfahren nach einem der vorhergehenden Ansprüche, **dadurch gekennzeichnet, dass** die Temperatur der Mischvorrichtung auf einen Wert zwischen -10 °C und 0 °C eingestellt wird.

5. Verfahren nach einem der vorhergehenden Ansprüche, **dadurch gekennzeichnet, dass** die Polyhydroxyalkohole ausgewählt sind aus Glycerin, Ethylenglycol, Propylenglycol, Diethylenglycol, Triethylenglycol und/oder Zuckeralkoholen; wobei die Polyhydroxyalkohole bis zu 30 Gewichtsprozent Wasser enthalten.

**6.** Verfahren nach Anspruch 4 oder 5, **dadurch gekennzeichnet, dass** die Zuckeralkohole aus Sorbitol, Maltitol, Xylitol, Mannitol, Lactitol, Erythritol, Isomalt und/oder hydrierten Stärkehydrolysaten ausgewählt sind.

**7.** Verfahren nach einem der vorhergehenden Ansprüche, **dadurch gekennzeichnet, dass** die Hydroxysäuren ausgewählt sind aus Milchsäure, Äpfelsäure, Weinsäure, Gluconsäure und/oder deren Salzen.

**8.** Verfahren nach einem der vorhergehenden Ansprüche, **dadurch gekennzeichnet, dass** die Polycarbonsäuren ausgewählt sind aus Bernsteinsäure, Adipinsäure, Zitronensäure, Isocitronensäure, Glucarsäure und/oder deren Salzen.

**9.** Verfahren nach einem der Ansprüche 1 bis 8, **dadurch gekennzeichnet, dass** die kontinuierliche Mischvorrichtung aus kontinuierlichen Schneckenmischern, kontinuierlichen Bandmischern oder Extrudern ausgewählt ist, die mit einer Schneckenkonfiguration ausgestattet sind, die ein Mischen ohne wesentliche mechanische Energiezufuhr ermöglicht.

**10.** Verfahren nach Anspruch 9, **dadurch gekennzeichnet, dass** ein Extruder verwendet wird, dessen Trommel- und Schneckentemperatur auf eine Temperatur zwischen -10 °C und 55 °C eingestellt sind.

**11.** Verfahren nach Anspruch 9 oder 10, **dadurch gekennzeichnet, dass** die Temperatur der plastifizierten Weizenglutenzusammensetzung, die aus der kontinuierlichen Mischvorrichtung ausgetragen wird, weniger als 90 °C, vorzugsweise weniger als 80 °C beträgt.

**12.** Verfahren nach einem der vorhergehenden Ansprüche, ferner umfassend das Zugeben eines Produkts ausgewählt aus den Nebenprodukten, die bei der Verarbeitung von landwirtschaftlichen und/oder forstwirtschaftlichen Rohmaterialien erhalten werden, Polysacchariden und deren Derivaten, anderen Proteinen pflanzlichen und/oder tierischen Ursprungs, mineralischen Verbindungen, synthetischen Polymeren und/oder Mischungen davon während oder nach dem Prozess des kontinuierlichen Mischens; wobei die Endzusammensetzung 99,5 bis 75 Gewichtsprozent einer plastifizierten Weizenglutenzusammensetzung, die durch einen Mischprozess nach einem der vorhergehenden Ansprüche hergestellt wird, und 0,5 bis 25 Gewichtsprozent des zugegebenen Produkts, umfasst.

**13.** Verfahren nach Anspruch 12, wobei die Endzusammensetzung 99 bis 85 Gewichtsprozent einer plastifizierten Weizenglutenzusammensetzung, die durch einen Mischprozess nach einem der vorhergehenden Ansprüche hergestellt wird, und 1 bis 15 Gewichtsprozent des zugegebenen Produkts, umfasst.

## Revendications

**1.** Méthode de fabrication d'applications pour l'alimentation humaine ou d'intermédiaires pour des applications non alimentaires comprenant une composition de gluten plastifiée, où du gluten et un plastifiant sont malaxés dans un dispositif de malaxage continu, **caractérisée en ce que** de 65 à 75 parties en poids de gluten vital de blé et de 25 à 35 parties en poids d'un plastifiant choisi dans le groupe constitué par les alcools polyhydroxylés, les hydrolysats d'amidon, les acides gras inférieurs ($C_2$ jusqu'à $C_{12}$), les hydroxyalkylamines, les acides hydroxylés, les acides polycarboxyliques et/ou l'urée, sont malaxées, et **en ce que** la température du dispositif de malaxage continu est réglée à une valeur comprise entre -10°C et 55°C, et **en ce que** la SME (Energie Mécanique Spécifique) appliquée au malaxage est inférieure à 250 kJ/kg.

**2.** Méthode selon la revendication 1, **caractérisée en ce que** le malaxage est effectué avec une SME inférieure à 200 kJ/kg.

**3.** Méthode selon l'une quelconque des revendications précédentes, **caractérisée en ce que** le malaxage est effectué avec une SME supérieure à 75 kJ/kg, préférablement supérieure à 150 kJ/kg, tout préférablement de 150 kJ/kg.

**4.** Méthode selon l'une quelconque des revendications précédentes, **caractérisée en ce que** la température du dispositif de malaxage est réglée à une valeur comprise entre -10°C et 0°C.

**5.** Méthode selon l'une quelconque des revendications précédentes, **caractérisée en ce que** les alcools polyhydroxylés sont choisis parmi le glycérol, l'éthylène glycol, le propylène glycol, le diéthylène glycol, le triéthylène glycol et/ou des alcools de sucre ; où lesdits alcools polyhydroxylés contiennent jusqu'à 30% en poids d'eau.

**6.** Méthode selon la revendication 4 ou 5, **caractérisée en ce que** les alcools de sucre sont choisis parmi le sorbitol, le maltitol, le xylitol, le mannitol, le lactitol, l'érythritol, l'isomalt, et/ou les hydrolysats d'amidon hydrogénés.

**7.** Méthode selon l'une quelconque des revendications précédentes, **caractérisée en ce que** les acides hydroxylés sont choisis parmi l'acide lactique, l'acide malique, l'acide tartrique, l'acide gluconique et/ou des sels de ceux-ci.

**8.** Méthode selon l'une quelconque des revendications précédentes, **caractérisée en ce que** les acides polycarboxyliques sont choisis parmi l'acide succinique, l'acide adipique, l'acide citrique, l'acide iso-citrique, l'acide glucarique et/ou des sels de ceux-ci.

**9.** Méthode selon l'une quelconque des revendications 1 à 8, **caractérisée en ce que** le dispositif de malaxage continu est choisi parmi les mélangeurs à vis continus, les mélangeurs à rubans continus ou les extrudeuses équipées d'une configuration de vis permettant un malaxage sans apport substantiel d'énergie mécanique.

**10.** Méthode selon la revendication 9, **caractérisée en ce qu'**une extrudeuse est utilisée, dans laquelle les températures du cylindre et de la vis sont réglées à une température comprise entre -10°C et 55°C.

**11.** Méthode selon la revendication 9 ou 10, **caractérisée en ce que** la température de la composition de gluten de blé plastifiée sortant du dispositif de malaxage continu est inférieure à 90°C, préférablement inférieure à 80°C.

**12.** Méthode selon l'une quelconque des revendications précédentes, comprenant en outre l'addition, pendant ou après le procédé de malaxage continu, d'un produit choisi parmi les sous-produits obtenus lors de la transformation de matières premières agricoles et/ou forestières, les polysaccharides et des dérivés de ceux-ci, d'autres protéines d'origine végétale et/ou animale, les composés minéraux, les polymères synthétiques et/ou des mélanges de ceux-ci ; où la composition finale comprend 99,5-75% en poids d'une composition de gluten de blé plastifiée préparée par un procédé de malaxage selon l'une quelconque des revendications précédentes, et 0,5-25% en poids du produit ajouté.

**13.** Méthode selon la revendication 12, **caractérisée en ce que** la composition finale comprend 99-85% en poids d'une composition de gluten de blé plastifiée préparée par un procédé de malaxage selon l'une quelconque des revendications précédentes, et 1-15% en poids du produit ajouté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6007858 A
- WO 0008944 A
- US 6818245 B
- WO 0241701 A
- GB 1433976 A
- EP 1066759 A
- US 5456934 A
- US 2586675 A

### Non-patent literature cited in the description

- **WRIGLEY et al.** Glutenin polymers - Natures largest proteins. Royal Australian Chemical Institute: North Melbourne, 1996, 316
- **GRAVELAND, A. et al.** A model for the molecular structure of the glutenins from wheat flour. *J Cereal Sci.,* 1985, vol. 3, 1-6
- **HOSENEY, R.C. et al.** Wheat gluten: a glassy polymer. *Cereal Chem.,* 1986, vol. 63, 285-286
- **ATTENBURROW et al.** Rheological properties of wheat gluten. *J. Cereal Sci.,* 1990, vol. 12, 1-14
- **REDL, A. et al.** Rheological properties of gluten plasticized with glycerol: dependence on temperature, glycerol content and mixing conditions. *Rheol. Acta,* 1999, vol. 38, 311-320
- **A. REDL ; S. GUILBERT et al.** The results of that work were published in several scientific journals, such as "Rheologicial properties of gluten plasticized with glycerol: dependence on temperature, glycerol content and mixing conditions. *Rheologica Acta,* 1999, vol. 38, 311-320
- *Les Cahiers de Rhéologie,* 1997, 339-347
- *J. Agric. Food Chem.,* 1999, vol. 47, 538-543
- *In Cereal Chemistry,* 1999, vol. 76, 361-369